(19) Europäisches Patentamt
European Patent Office
Office européen des brevets

(11) EP 3 215 556 B1

(12) # FASCICULE DE BREVET EUROPEEN

(45) Date de publication et mention de la délivrance du brevet:
**17.10.2018 Bulletin 2018/42**

(21) Numéro de dépôt: **15801906.7**

(22) Date de dépôt: **06.11.2015**

(51) Int Cl.:
***C08G 77/08*** *(2006.01)* ***C08L 83/04*** *(2006.01)*
***C08L 83/14*** *(2006.01)*

(86) Numéro de dépôt international:
**PCT/FR2015/053014**

(87) Numéro de publication internationale:
**WO 2016/071652 (12.05.2016 Gazette 2016/19)**

(54) **NOUVEAUX CATALYSEURS DE RÉTICULATION DE COMPOSITIONS SILICONES**

NEUARTIGE SILIKONZUSAMMENSETZUNG ZUR VERNETZUNG VON KATALYSATOREN

NOVEL SILICONE COMPOSITION CROSSLINKING CATALYSTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2014 FR 1460803**

(43) Date de publication de la demande:
**13.09.2017 Bulletin 2017/37**

(73) Titulaires:
- **ELKEM SILICONES France SAS**
  **69003 Lyon (FR)**
- **Université Claude Bernard Lyon 1**
  **69622 Villeurbanne, Cedex (FR)**
- **Centre National de la Recherche Scientifique (C.N.R.S.)**
  **75016 Paris (FR)**

(72) Inventeurs:
- **MONTEIL, Vincent**
  **F-69003 Lyon (FR)**
- **RAYNAUD, Jean**
  **F-69100 Villeurbanne (FR)**
- **CROZET, Delphine**
  **F-69100 Villeurbanne (FR)**
- **BOUSQUIÉ, Magali**
  **F-69003 Lyon (FR)**
- **MARROT, Sébastien**
  **F-69008 Lyon (FR)**

(74) Mandataire: **Mekki, Boualem**
**Elkem Silicones France SAS**
**Dépt. Brevets - Bât. 77**
**55, avenue des Frères Perret**
**69190 Saint-Fons (FR)**

(56) Documents cités:
**EP-A2- 0 604 104 WO-A1-2013/052838**
**FR-A1- 2 207 924**

- **BOGDAN MARCINIEC ET AL: "Catalysis of hydrosilylation Part XXV. Effect of nickel(O) and nickel(II) complex catalysts on dehydrogenative silylation, hydrosilylation and dimerization of vinyltriethoxysilane", JOURNAL OF ORGANOMETALLIC CHEMISTRY, vol. 484, no. 1-2, 27 décembre 1994 (1994-12-27), pages 147-151, XP055180965, ISSN: 0022-328X, DOI: 10.1016/0022-328X(94)87198-1**
- **Bogdan Marciniec ET AL: "Catalysis of hydrosilylation XX *. Unusual reaction of vinyltriethoxysilane with triethoxysilane catalyzed by nickel acetylacetonate", Journal of Organometallic Chemistry Lausanne JOM, 15 octobre 1991 (1991-10-15), pages 61-67, XP055180963, Extrait de l'Internet: URL:http://ac.els-cdn.com/0022328X9186346R/1-s2.0-0022328X9186346R-main.pdf?_tid=59dd15b4-d91c-11e4-9e20-00000aacb362&acdnat=1427967831_5ba20ce87c32113fd6220a6601545c16 [extrait le 2015-04-02]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 215 556 B1

## Description

### DOMAINE DE L'INVENTION

La présente invention concerne le domaine de la réticulation des compositions silicones dans lesquelles sont mis en contact des réactifs possédant au moins deux liaisons insaturées et des composés organosiliciés possédant au moins deux motifs hydrogénosilylés (≡SiH) en présence d'un catalyseur **C** qui est un complexe répondant à la formule suivante:

$$[Co(L^1)_2]$$

dans laquelle le symbole Co représente le cobalt au degré d'oxydation II, et les symboles $L^1$, identiques ou différents, représentent un ligand qui est un anion β-dicarbonylato ou l'anion énolate d'un composé β-dicarbonylé.

### ARRIERE-PLAN TECHNOLOGIQUE

Dans le domaine de la réticulation des compositions silicones, l'hydrosilylation, également appelée polyaddition, est une réaction prépondérante.

Lors d'une réaction d'hydrosilylation, un composé comprenant au moins une insaturation réagit avec un composé comprenant au moins un atome d'hydrogène lié à un atome de silicium. Cette réaction peut par exemple être décrite par l'équation réactionnelle (1) dans le cas d'une insaturation de type alcène :

(1)

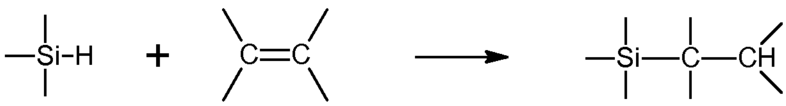

ou par l'équation réactionnelle (2) dans le cas d'une insaturation de type alcyne :

(2)

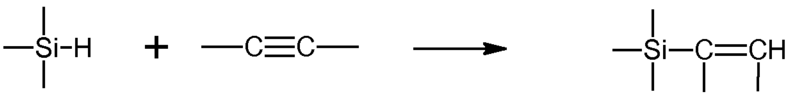

L'hydrosilylation de composés insaturés est réalisée par catalyse, à l'aide de catalyseur organométallique. Actuellement, le catalyseur organométallique approprié pour cette réaction est un catalyseur au platine. Ainsi, la plupart des réactions industrielles d'hydrosilylation sont catalysées par le complexe de platine de Karstedt, de formule générale $Pt_2$(divinyltétraméthyldisiloxane)$_3$ (ou en abrégé $Pt_2(DVTMS)_3$) :

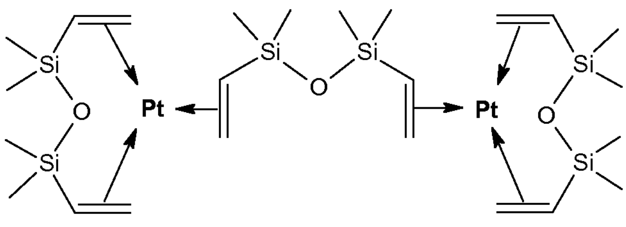

.

Au début des années 2000, la préparation de complexes de platine - carbène de formule générale :

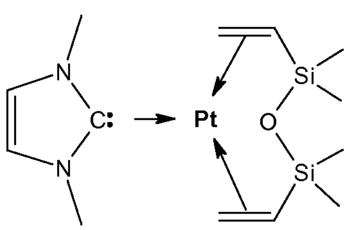

a permis d'avoir accès à des catalyseurs plus stables (voir par exemple la demande internationale de brevet WO 01/42258).

Toutefois, l'utilisation de catalyseurs organométalliques au platine est toujours problématique. Il s'agit d'un métal toxique, cher, en voie de raréfaction et dont le coût fluctue énormément. Son utilisation à l'échelle industrielle est donc difficile. On souhaite donc diminuer autant que possible la quantité de catalyseur nécessaire à la réaction, sans pour autant diminuer le rendement et la vitesse de la réaction. Par ailleurs, on souhaite disposer d'un catalyseur stable au cours de la réaction. Il a été constaté que, lors de la réaction catalysée, le platine métallique pouvait précipiter, ce qui a pour conséquence la formation de colloïdes insolubles dans le milieu réactionnel. Le catalyseur est alors moins actif. De plus, ces colloïdes forment un trouble dans le milieu réactionnel, et les produits obtenus ne sont pas satisfaisants esthétiquement car ils sont colorés.

Enfin, les complexes à base de platine catalysent les réactions d'hydrosilylation à température ambiante avec une cinétique rapide, de l'ordre de quelques minutes. Afin d'avoir le temps de préparer, transporter et mettre en oeuvre la composition avant son durcissement, il est souvent nécessaire d'inhiber temporairement la réaction d'hydrosilylation. Par exemple, lorsqu'on souhaite revêtir un substrat papier ou polymère d'un revêtement silicone anti-adhérent, la composition silicone est formulée pour former un bain qui doit rester liquide à température ambiante pendant plusieurs heures avant d'être déposée sur le substrat. Ce n'est qu'après ce dépôt que l'on souhaite que le durcissement par hydrosilylation se produise. L'introduction d'additifs inhibiteurs d'hydrosilylation permet d'empêcher efficacement la réaction aussi longtemps que nécessaire avant activation. Toutefois, il est parfois nécessaire d'utiliser de grandes quantités d'agent inhibiteur, ce qui provoque une forte inhibition du catalyseur d'hydrosilylation. Cela a pour conséquence que la vitesse de durcissement de la composition, même après activation, est ralentie, ce qui est un inconvénient important d'un point de vue industriel car cela oblige notamment à réduire la vitesse d'enduction et donc la cadence de production.

Il serait donc intéressant de proposer des catalyseurs organométalliques alternatifs aux catalyseurs à base de platine et de disposer de nouvelles compositions réticulables et/ou durcissables au moyen de catalyseurs ne présentant plus les problèmes décrits ci-dessus, en particulier ne nécessitant pas d'utiliser d'agent inhibiteur.

Cet objectif est atteint à l'aide d'un catalyseur qui est un complexe du cobalt (II) présentant une structure spécifique. Ces catalyseurs, en particulier, ne nécessitent pas d'être manipulés sous atmosphère protectrice (par exemple sous argon). Les réactions de réticulation dans lesquelles ils sont mis en oeuvre peuvent également être opérées à l'air, sans atmosphère protectrice.

La présente invention a ainsi pour objet, selon un premier aspect, une composition **X** réticulable comprenant :

- au moins un composé organopolysiloxane **A** comportant, par molécule, au moins deux radicaux alcényles en $C_2$-$C_6$ liés à des atomes de silicium,
- au moins un composé organohydrogénopolysiloxane **B** comportant, par molécule, au moins deux atomes d'hydrogène liés à un atome de silicium identique ou différent,
  - au moins un catalyseur **C** qui est un complexe répondant à la formule suivante:

    $$[Co(L^1)_2]$$

    dans laquelle:

    - le symbole Co représente le cobalt au degré d'oxydation II,
    - les symboles $L^1$, identiques ou différents, représentent un ligand qui est un anion β-dicarbonylato ou l'anion énolate d'un composé β-dicarbonylé,
- éventuellement au moins un promoteur d'adhérence **D** et
- éventuellement au moins une charge **E.**

La composition **X** selon l'invention est réticulable, c'est-à-dire, au sens de la présente demande, qu'une fois que les composés A et B ont réagi entre eux en présence du catalyseur C, un réseau en trois dimensions se forme, ce qui conduit au durcissement de la composition. La réticulation implique donc un changement physique progressif du milieu constituant la composition.

L'invention a également pour objet, selon un second aspect, l'utilisation du catalyseur **C** précédemment décrit comme catalyseur de réticulation de compositions silicones.

L'invention a encore pour objet, selon un troisième aspect, un procédé de réticulation de compositions silicones, caractérisé en ce qu'il consiste à chauffer la composition **X** précédemment décrite à une température allant de 70 à 200°C, de préférence de 80 à 150°C, et plus préférentiellement de 80 à 130°C, ainsi que le matériau silicone réticulé **Y** ainsi obtenu.

Enfin, l'invention a pour objet, selon un quatrième aspect, un matériau silicone réticulé **Y** obtenu par chauffage à une température allant de 70 à 200°C, de préférence de 80 à 150°C, et plus préférentiellement de 80 à 130°C, d'une composition **X** réticulable telle que décrite précédemment.

On entend par « matériau silicone réticulé » tout produit à base de silicone obtenu par réticulation et/ou durcissement de compositions comprenant des organopolysiloxanes possédant au moins deux liaisons insaturées et des organopolysiloxanes possédant au moins deux motifs hydrogénosilylés (=SiH). Le matériau silicone réticulé peut par exemple être un élastomère, un gel ou une mousse.

Suivant une modalité particulièrement avantageuse, l'organopolysiloxane **A** comportant, par molécule, au moins deux radicaux alcényles en $C_2$-$C_6$ liés à des atomes de silicium, comprend :

(i) au moins deux motifs siloxyles **(A.1),** identiques ou différents, de formule suivante :

$$W_aZ_bSiO_{\frac{4-(a+b)}{2}} \quad \textbf{(A.1)}$$

dans laquelle :

- a= 1 ou 2, b= 0, 1 ou 2 et a+b= 1, 2 ou 3;
- les symboles W, identiques ou différents, représentent un groupement alcényle linéaire ou ramifié en $C_2$-$C_6$,
- et les symboles Z, identiques ou différents, représentent un groupe hydrocarboné monovalent ayant de 1 à 30 atomes de carbone, et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle,

(ii) et éventuellement au moins un motif siloxyle de formule suivante :

$$Z^1_aSiO_{\frac{4-a}{2}} \quad \textbf{(A.2)}$$

dans laquelle :

- a= 0, 1, 2 ou 3,
- les symboles $Z^1$, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone inclus et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle.

Avantageusement, les radicaux Z et $Z^1$ sont choisis parmi le groupe constitué par un radical méthyle et phényle, et W est choisis parmi la liste suivante : vinyle, propényle, 3-butènyle, 5-hexènyle, 9-décényle, 10-undécènyle, 5,9-décadiènyle et 6-11-dodécadiényle, et de préférence W est un vinyle.

Ces organopolysiloxanes peuvent présenter une structure linéaire, ramifiée, ou cyclique. Leur degré de polymérisation est, de préférence, compris entre 2 et 5000.

Lorsqu'il s'agit de polymères linéaires, ceux-ci sont essentiellement constitués de motifs siloxyles « D » choisis parmi le groupe constitué par les motifs siloxyles $W_2SiO_{2/2}$, $WZSiO_{2/2}$ et $Z^1_2SiO_{2/2}$, et de motifs siloxyles « M » choisis parmi le groupe constitué par les motifs siloxyles $W_3SiO_{1/2}$, $WZ_2SiO_{1/2}$, $W_2ZSiO_{1/2}$ et $Z^1_3SiO_{1/2}$. Les symboles W, Z et $Z^1$ sont tels que décrits ci-dessus.

A titre d'exemples de motifs « M » terminaux, on peut citer les groupes triméthylsiloxy, diméthylphénylsiloxy, diméthylvinylsiloxy ou diméthylhexènylsiloxy.

A titre d'exemples de motifs « D », on peut citer les groupes diméthylsiloxy, méthylphénylsiloxy, méthylvinylsiloxy, méthylbutènylsiloxy, méthylhexènylsiloxy, méthyldécènylsiloxy ou méthyldécadiènylsiloxy.

Lesdits organopolysiloxanes **A** peuvent être des huiles de viscosité dynamique de l'ordre de 10 à 100000

mPa.s à 25°C, généralement de l'ordre de 10 à 70000 mPa.s à 25°C, ou des gommes présentant une masse moléculaire de l'ordre de 1 000 000 mPa.s ou plus à 25°C.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Lorsqu'il s'agit d'organopolysiloxanes cycliques, ceux-ci sont constitués de motifs siloxyles «D» de formules suivantes : $W_2SiO_{2/2}$, $Z_2SiO_{2/2}$ ou $WZSiO_{2/2}$, qui peuvent être du type dialkylsiloxy, alkylarylsiloxy, alkylvinylsiloxy, alkylsiloxy. Des exemples de tels motifs siloxyles ont déjà été cités ci-dessus. Lesdits organopolysiloxanes **A** cycliques présentent une viscosité de l'ordre de 10 à 5000 mPa.s à 25°C.

Selon un mode préféré de réalisation, la composition **X** selon l'invention comprend un second composé organopolysiloxane comportant, par molécule, au moins deux radicaux alcényles en $C_2$-$C_6$ liés à des atomes de silicium, différent du composé organopolysiloxane **A,** ledit second composé organopolysiloxane étant de préférence le divinyltétraméthylsiloxane (dvtms).

De préférence, le composé organopolysiloxane **A** a une teneur massique en motif Si-vinyle comprise entre 0,001 et 30%, de préférence entre 0,01 et 10%.

Selon un mode de réalisation préféré, le composé organohydrogénopolysiloxane **B** est un organopolysiloxane ayant au moins deux atomes d'hydrogène, par molécule, liés à un atome de silicium identique ou différent et, de préférence, ayant au moins trois atomes d'hydrogène par molécule directement liés à un atome de silicium identique ou différent.

Avantageusement, le composé organohydrogénopolysiloxane **B** est un organopolysiloxane comprenant :

(i) au moins deux motifs siloxyles et, de préférence, au moins trois motifs siloxyles de formule suivante:

$$H_dZ^3_eSiO_{\frac{4-(d+e)}{2}} \qquad \textbf{(B.1)}$$

dans laquelle:

- d= 1 ou 2, e = 0, 1 ou 2 et d+e= 1, 2 ou 3,
- les symboles $Z^3$, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle, et

(ii) éventuellement au moins un motif siloxyle de formule suivante :

$$Z^2_cSiO_{\frac{4-c}{2}} \quad \textbf{(B.2)}$$

dans laquelle :

- c= 0, 1, 2 ou 3,
- les symboles $Z^2$, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle.

Le composé organohydrogénopolysiloxane **B** peut être uniquement formé de motifs siloxyle de formule **(B.1)** ou comporter en plus des motifs de formule **(B.2).** Il peut présenter une structure linéaire, ramifiée, ou cyclique. Le degré de polymérisation est de préférence supérieur ou égal à 2. Plus généralement, il est inférieur à 5000.

Des exemples de motifs siloxyles de formule **(B.1)** sont notamment les motifs suivants :$H(CH_3)_2SiO_{1/2}$, $HCH_3SiO_{2/2}$ et $H(C_6H_5)SiO_{22}$..

Lorsqu'il s'agit de polymères linéaires, ceux-ci sont essentiellement constitués :

- de motifs siloxyles « D » choisis parmi les motifs de formules suivantes $Z^2{}_2SiO_{2/2}$ ou $Z^3HSiO_{2/2}$, et
- de motifs siloxyles « M » choisis parmi les motifs de formules suivantes $Z^2{}_3SiO_{1/2}$ ou $Z^3{}_2HSiO_{1/2}$.

Ces organopolysiloxanes linéaires peuvent être des huiles de viscosité dynamique à de l'ordre de 1 à 100 000 mPa.s à 25°C, généralement de l'ordre de 10 à 5000 mPa.s à 25°C, ou des gommes présentant une masse moléculaire de l'ordre de 1 000 000 mPa.s ou plus à 25°C.

Lorsqu'il s'agit d'organopolysiloxanes cycliques, ceux-ci sont constitués de motifs siloxyles « D » de formules suivantes $Z^2{}_2SiO_{2/2}$ et $Z^3HSiO_{2/2}$, qui peuvent être du type dialkylsiloxy ou alkylarylsiloxy ou de motifs $Z^3HSiO_{2/2}$ uniquement. Ils présentent alors une viscosité de l'ordre de 1 à 5000 mPa.s.

Des exemples de composé organohydrogénopolysiloxane linéaire **B** sont : les diméthylpolysiloxanes à extrémités hydrogénodiméthylsilyles, les diméthylhydrogénométhylpolysiloxanes à extrémités triméthylsilyles, les diméthylhydrogénométhylpolysiloxanes à extrémités hydrogénodiméthylsilyles, les hydrogénométhylpolysiloxanes à extrémités triméthylsilyles, et les hydrogénométhylpolysiloxanes cycliques.

Sont notamment préférés à titre de composé organohydrogénopolysiloxane **B,** les oligomères et polymères répondant à la formule générale **(B.3)** :

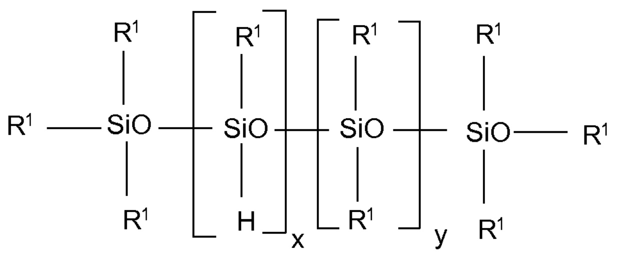

**(B.3)**

dans laquelle :

- x et y sont un nombre entier variant entre 0 et 200,
- les symboles $R^1$, identiques ou différents, représentent indépendamment les uns des autres :
  - un radical alkyle linéaire ou ramifié contenant 1 à 8 atomes de carbone, éventuellement substitué par au moins un halogène, de préférence le fluor, les radicaux alkyle étant, de préférence, méthyle, éthyle, propyle, octyle et 3,3,3-trifluoropropyle,
  - un radical cycloalkyle contenant entre 5 et 8 atomes de carbone cycliques,
  - un radical aryle contenant entre 6 et 12 atomes de carbone, ou
  - un radical aralkyle ayant une partie alkyle contenant entre 5 et 14 atomes de carbone et une partie aryle contenant entre 6 et 12 atomes de carbone.

Conviennent particulièrement à l'invention à titre de composé organohydrogénopolysiloxane **B** les composés suivants :

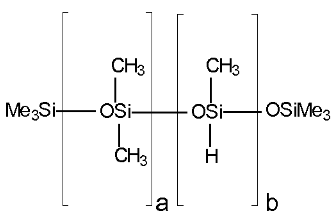

S1

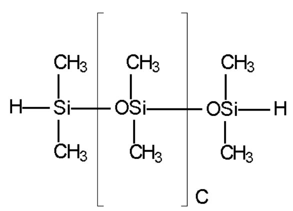

S2

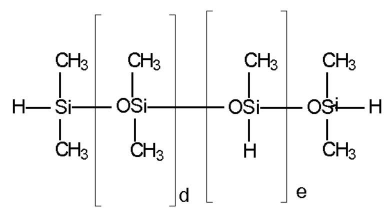

S3

avec a, b, c, d et e définis ci-dessous :

- dans le polymère de formule S1 :
  - $0 \leq a \leq 150$, de préférence $0 \leq a \leq 100$, et plus particulièrement $0 \leq a \leq 20$, et
  - $1 \leq b \leq 90$ de préférence $10 \leq b \leq 80$ et plus particulièrement $30 \leq b \leq 70$,

- dans le polymère de formule S2 : $0 \leq c \leq 15$
- dans le polymère de formule S3 : $5 \leq d \leq 200$, de préférence $20 \leq d \leq 100$, et $2 \leq e \leq 90$, de préférence $10 \leq e \leq 70$.

En particulier, le composé organohydrogénopolysiloxane **B** convenant à l'invention est le composé de formule S1, où a=0.
De préférence le composé organohydrogénopolysiloxane **B** a une teneur massique en motif SiH comprise entre 0,2 et 91%, de préférence entre 0,2 et 50%.
Dans le cadre de l'invention, les proportions de l'organopolysiloxane **A** et de l'organohydrogénopolysiloxane **B** sont telles que le rapport molaire des atomes d'hydrogène liés au silicium (Si-H) dans l'organohydrogénopolysiloxane **B** sur les radicaux alcényles liés au silicium ($Si-CH=CH_2$) dans l'organopolysiloxane **A** est compris entre 0,2 et 20,de préférence entre 0,5 et 15, plus préférentiellement entre 0,5 et 10 et encore plus préférentiellement entre 0,5 et 5.
La composition selon l'invention met en oeuvre au moins un catalyseur **C** qui est un complexe répondant à la formule suivante:

$$[Co(L^1)_2]$$

dans laquelle:

- le symbole Co représente le cobalt au degré d'oxydation II,
- les symboles $L^1$, identiques ou différents, représentent un ligand qui est un anion β-dicarbonylato ou l'anion énolate d'un composé β-dicarbonylé.

Il est à noter qu'au moins une partie du caractère inventif de l'invention, tient à la sélection judicieuse et avantageuse de la structure du catalyseur **C.**
Selon une autre disposition préférée de réalisation de l'invention, le ligand $L^1$ est un anion dérivé d'un composé de formule (1) :

$$R^1COCHR^2COR^3 \qquad \textbf{(1)}$$

dans laquelle :

- $R^1$ et $R^3$, identiques ou différents, représentent un radical hydrocarboné en $C_1$-$C_{30}$ linéaire, cyclique ou ramifié, un aryle contenant entre 6 et 12 atomes de carbone, ou un radical $-OR^4$ avec $R^4$ qui représente un radical hydrocarboné en $C_1$-$C_{30}$ linéaire, cyclique ou ramifié,
- $R^2$ est un atome d'hydrogène ou un radical hydrocarboné, de préférence alkyle, comprenant de 1 à 4 atomes de carbone ; avec
- $R^1$ et $R^2$ peuvent être reliés pour former un cycle en $C_5$-$C_6$, et
- $R^2$ et $R^4$ peuvent être reliés pour former un cycle en $C_5$-$C_6$.

Avantageusement, le composé de formule **(1)** est choisi parmi le groupe constitué par les β-dicétones: 2,4-pentanedione (acac); l'hexanedione-2,4; heptanedione-2,4; heptanedione-3,5; l'éthyl-3 pentanedione-2,4; méthyl-5 hexanedione-2,4; octanedione-2,4; octanedione-3,5; diméthyl-5,5 hexanedione-2,4; méthyl-6 heptanedione-2,4; diméthyl-2, 2 nonanedione-3,5; diméthyl-2,6 heptanedione-3,5; 2-acétylcyclohexanone (*Cy-acac*); 2,2,6,6-tétraméthyl-3,5-heptanedione (*TMHD*); 1,1,1,5,5,5-hexafluoro-2,4-pentanedione (*F-acac*)]; benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; benzoylstéaroylméthane; benzoylpalmitoylméthane ; octanoylbenzoylméthane; 4-t-butyl-4'-méthoxy-dibenzoylméthane; 4,4'-diméthoxy-dibenzoylméthane et 4,4'-di-tert-butyl-dibenzoylméthane, et de préférence parmi les β-dicétones 2,4-pentanedione (acac) et 2,2,6,6-tétraméthyl-3,5-heptanedione *(TMHD).*
Selon une autre disposition préférée de réalisation de l'invention, le ligand β-dicarbonylato $L^1$ est un anion β-cétoestérato choisi parmi le groupe constitué par les anions dérivés des composés suivants: les esters méthylique, éthylique, n-propylique, isopropylique, n-butylique, sec-butylique, isobutylique, tertiobutylique, isopentylique, n-hexylique, n-octylique, méthyl-1 heptylique, n-nonylique, n-décylique et n-dodécylique de l'acide acétylacétique ou ceux décrit dans la demande de brevet FR-A-1435882.
Selon un mode particulièrement préféré de réalisation, le catalyseur **C** est choisi parmi les complexes $[Co(acac)_2]$, $[Co(TMHD)_2]$ $[Co(cétoester)_2]$ et $[Co(Rhodiastab\ 50)_2]$. Il est entendu que dans les formules ci-dessus « acac » signifie l'anion dérivé du composé 2,4-pentanedione, « THMD » signifie l'anion dérivé du composé 2,2,6,6-tétraméthyl-3,5-heptanedione, « cétoester » signifie l'anion dérivé d'un ester méthylique de l'acide acétylacétique et « Rhodiastab 50 » signifie un mélange d'anions dérivés du composé benzoylstéaroylméthane, et d'anions dérivés du

composé benzoylpalmitoylméthane.

Le catalyseur **C** peut notamment être présent dans la composition **X** selon l'invention en une teneur allant de 0,001 à 10% molaire de cobalt par nombre de moles de radicaux alcényles en $C_2$-$C_6$ liés à des atomes de silicium du composé organopolysiloxane **A,** de préférence de 0,01 à 7%, et plus préférentiellement de 0,1 à 5%.

La composition **X** selon l'invention est de préférence exempte de catalyseur à base de platine, de palladium, de ruthénium ou de rhodium. Par « exempte » de catalyseur autre que le catalyseur **C,** on entend que la composition **X** selon l'invention comprend moins de 0,1% en poids de catalyseur autre que le catalyseur **C,** de préférence moins de 0,01% en poids, et plus préférentiellement moins de 0,001% en poids, par rapport au poids total de la composition.

La composition **X** peut avantageusement comprendre au moins un promoteur d'adhérence **D.**

Sans que cela ne soit limitatif, il peut être considéré que le promoteur d'adhérence **D** comporte:

- (D.1) au moins un organosilane alcoxylé contenant, par molécule, au moins un groupe alcényle en $C_2$-$C_6$, ou
- (D.2) au moins un composé organosilicié comprenant au moins un radical époxy, ou
- (D.3) au moins un chélate de métal M et/ou un alcoxyde métallique de formule générale : M(OJ)n, avec n = valence de M et J = alkyle linéaire ou ramifié en $C_1$-$C_8$, M étant choisi dans le groupe formé par : Ti, Zr, Ge, Li, Mn, Fe, Al et Mg ou leurs mélanges

Conformément à une disposition préférée de l'invention, l'organosilane alcoxylé (D.1) du promoteur d'adhérence **D** est sélectionné parmi les produits de formule générale suivante:

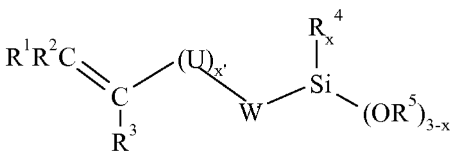

(D.1)

formule dans laquelle :

- R1, R2, R3 sont des radicaux hydrogénés ou hydrocarbonés identiques ou différents entre eux et représentent un atome d'hydrogène, un alkyle linéaire ou ramifié en $C_1$-$C_4$ ou un phényle éventuellement substitué par au moins un alkyle en $C_1$-$C_3$,
- U est un alkylène linéaire ou ramifié en $C_1$-$C_4$,
- W est un lien valentiel,
- $R^4$ et $R^5$ sont des radicaux identiques ou différents et représentent un alkyle en $C_1$-$C_4$ linéaire ou ramifié,
- x' = 0 ou 1, et
- x = 0 à 2.

Sans que cela soit limitatif, il peut être considéré que le vinyltriméthoxysilane est un composé (D.1) particulièrement approprié.

S'agissant du composé organosilicié (D.2), il est prévu conformément à l'invention, de le choisir:

a) soit parmi les produits (D.2a) répondant à la formule générale suivante :

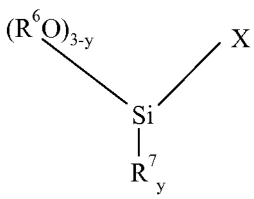

(D.2a)

formule dans laquelle :

- $R^6$ est un radical alkyle linéaire ou ramifié en $C_1$-$C_4$,
- $R^7$ est un radical alkyle linéaire ou ramifié,

- y est égal à 0, 1, 2 ou 3, et
- X étant défini par la formule suivante :

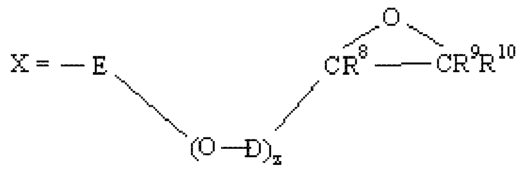

avec :

- E et D qui sont des radicaux identiques ou différents choisis parmi les alkyles en $C_1$-$C_4$ linéaires ou ramifiés,
- z qui est égal à 0 ou 1,
- $R^8$, $R^9$, $R^{10}$ qui sont des radicaux identiques ou différents représentant un atome d'hydrogène ou un alkyle linéaire ou ramifié en $C_1$-$C_4$, et
- $R^8$ et $R^9$ ou $R^{10}$ pouvant alternativement constituer ensemble et avec les deux carbones porteurs de l'époxy, un cycle alkyle ayant de 5 à 7 chaînons, ou

b) soit parmi les produits (D.2b) constitués par des polydiorganosiloxanes époxyfonctionnels comportant :

(i) au moins un motif siloxyle de formule :

$$X_p G_q SiO \frac{4-(p+q)}{2}$$

(D.2 bi)

formule dans laquelle :

- X est le radical tel que défini ci-dessus pour la formule (D.2 a)
- G est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles contenant entre 6 et 12 atomes de carbone,
- p = 1 ou 2,
- q = 0, 1 ou 2,
- p + q = 1, 2 ou 3. et

et (ii) éventuellement au moins un motif siloxyle de formule :

$$G_r SiO \frac{4-r}{2}$$

(D.2 bii)

formule dans laquelle G a la même signification que ci-dessus et r est égale à 0, 1, 2 ou 3.

En ce qui concerne le dernier composé (D.3) du promoteur d'adhérence D,les produits préférés sont ceux dont le métal M du chélate et/ou de l'alcoxyde (D.3) est choisi dans la liste suivante : Ti, Zr, Ge, Li ou Mn. Il est à souligner que le titane est plus particulièrement préféré. On peut lui associer, par exemple, un radical alkoxy de type butoxy.
Le promoteur d'adhérence **D** pourra être formé de :

- (D.1) seul
- (D.2) seul
- (D.1) + (D.2)

Ou selon deux modalités préférées de :

- (D.1) + (D.3)
- (D.2) + (D.3)

et enfin selon la modalité la plus préférée : (D.1) + (D.2) + (D.3).

Selon l'invention, une combinaison avantageuse pour former le promoteur d'adhérence est la suivante :

- vinyltriméthoxysilane (VTMO), 3-glycidoxypropyltriméthoxysilane (GLYMO) et titanate de butyle.

Sur le plan quantitatif, il peut être précisé que les proportions pondérales entre (D.1), (D.2) et (D.3), exprimées en pourcentages en poids par rapport au total des trois, sont les suivantes :

- (D.1) $\geq$ 10, de préférence compris entre 15 et 70 et plus préférentiellement encore entre 25 à 65,
- (D.2) $\leq$ 90, de préférence compris entre 70 et 15 et plus préférentiellement encore entre 65 à 25, et
- (D.3) $\geq$ 1, de préférence compris entre 5 et 25 et plus préférentiellement encore entre 8 à 18,

étant entendu que la somme de ces proportions en (D.1), (D.2) et (D.3) est égale à 100%.

Pour de meilleures propriétés d'adhésion, le ratio pondéral (D.2) : (D.1) est de préférence compris entre 2 : 1 et 0,5 : 1, le ratio 1 : 1 étant plus particulièrement préféré.

Avantageusement, le promoteur d'adhérence **D** est présent à raison de 0,1 à 10% en poids, de préférence 0,5 à 5% en poids, et plus préférentiellement de 1 à 3 % en poids, par rapport au poids total de l'ensemble des constituants de la composition **X.**

Selon un mode particulier de réalisation, la composition **X** selon l'invention comprend également au moins une charge **E**.

Les charges **E** éventuellement contenues dans les compositions selon l'invention sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 $\mu$m (micromètres) et une surface spécifique BET supérieure à 30 m2/g, de préférence comprise entre 30 et 350 m2/g. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium éventuellement traité en surface par des acides gras, l'oxyde de zinc, le mica, le talc, l'oxyde de fer, le sulfate de baryum et la chaux éteinte. Ces charges ont une granulométrie généralement comprise entre 0,001 et 300 $\mu$m (micromètres) et une surface BET inférieure à 100 m2/g. De façon pratique mais non limitative, les charges employées peuvent être un mélange de quartz et de silice. Les charges peuvent être traitées par tout produit approprié. Sur le plan pondéral, on préfère mettre en oeuvre une quantité de charge comprise entre 1% et 50% en poids, de préférence entre 1% et 40% en poids par rapport à l'ensemble des constituants de la composition.

La composition **X** selon l'invention peut, en outre, comprendre un ou plusieurs additifs fonctionnels usuels. Comme familles d'additifs fonctionnels usuels, on peut citer :

- les résines silicone,
- les modulateurs d'adhérence,
- les additifs pour augmenter la consistance,
- les pigments, et
- les additifs de tenue thermique, de tenue aux huiles ou de tenue au feu, par exemple les oxydes métalliques.

Les résines silicone sont des oligomères ou polymères organopolysiloxanes ramifiés bien connus et disponibles dans le commerce. Elles présentent, dans leur structure, au moins deux motifs différents choisis parmi ceux de formule $R_3SiO_{1/2}$ (motif M), $R_2SiO_{2/2}$ (motif D), $RSiO_{3/2}$(motif T) et $SiO_{4/2}$ (motif Q), l'un au moins de ces motifs étant un motif T ou Q.

Les radicaux R sont identiques ou différents et sont choisis parmi les radicaux alkyles linéaires ou ramifiés en C1 - C6, hydroxyle, phényle, trifluoro-3,3,3 propyle. On peut citer par exemple comme radicaux alkyles, les radicaux méthyle, éthyle, isopropyle, tertiobutyle et n-hexyle.

Comme exemples d'oligomères ou de polymères organopolysiloxanes ramifiés, on peut citer les résines MQ,

les résines MDQ, les résines TD et les résines MDT, les fonctions hydroxyles pouvant être portées par les motifs M, D et/ou T. Comme exemple de résines qui conviennent particulièrement bien, on peut citer les résines MDQ hydroxylées ayant une teneur pondérale en groupe hydroxyle comprise entre 0,2 et 10 % en poids.

Les compositions **X** selon l'invention peuvent notamment être obtenues en introduisant en premier lieu le catalyseur **C** dans le milieu réactionnel, puis en ajoutant l'organopolysiloxane A sous agitation. Enfin, le composé organohydrogénopolysiloxane B est introduit et la température du mélange est augmentée pour atteindre la température de réticulation. Le mélange est maintenu à la température de réticulation jusqu'à l'arrêt de l'agitation dû à une augmentation de la viscosité du mélange.

La présente invention a également pour objet un procédé de réticulation de compositions silicones, caractérisé en ce qu'il consiste à chauffer la composition **X** telle que définie précédemment à une température allant de 70 à 200°C, de préférence de 80 à 150°C, et plus préférentiellement de 80 à 130°C.

L'invention a également pour objet un matériau silicone réticulé **Y** obtenu par chauffage à une température allant de 70 à 200°C, de préférence de 80 à 150°C, et plus préférentiellement de 80 à 130°C, d'une composition **X** réticulable comprenant :

- au moins un composé organopolysiloxane **A** comportant, par molécule, au moins deux radicaux alcényles en $C_2$-$C_6$ liés à des atomes de silicium,
- au moins un composé organohydrogénopolysiloxane **B** comportant, par molécule, au moins deux atomes d'hydrogène liés à un atome de silicium identique ou différent,
- au moins un catalyseur **C** qui est un complexe répondant à la formule suivante:

  $$[Co(L^1)_2]$$

  dans laquelle:

  - le symbole Co représente le cobalt au degré d'oxydation II,
  - les symboles $L^1$, identiques ou différents, représentent un ligand qui est un anion β-dicarbonylato ou l'anion énolate d'un composé β-dicarbonylé,

- éventuellement au moins un promoteur d'adhérence **D** et
- éventuellement au moins une charge **E.**

La composition selon l'invention présente l'avantage de ne pas être sensible à l'air et de pouvoir ainsi être mise en oeuvre et notamment réticuler sous atmosphère non inerte, et en particulier à l'air.

La présente invention est illustrée plus en détails dans les exemples de réalisation non limitatifs.

**EXEMPLE 1 : catalyseurs à base de cobalt pour la réticulation de dvtms avec MD'$_{50}$M**

I) Constituants

1) Organopolysiloxane **A :** divinyltétraméthylsiloxane (dvtms) (1,073 mole de radicaux vinyle liés au silicium pour 100g d'huile)
2) Organohydrogénopolysiloxane **B** : de formule : MD'$_{50}$M (1,58 mole d'atomes d'hydrogène liés au silicium pour 100g d'huile), avec : M: $(CH_3)_3SiO_{1/2;}$ et D': $(CH_3)HSiO_{2/2}$
3) Catalyseurs **(A), (B), (C), (D), (E)** et **(F)** :

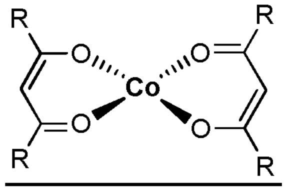

**(A)** = $[Co(TMHD)_2]$ quand R = t-Butyle

**(B)** = $[Co(acac)_2]$ quand R = Méthyle

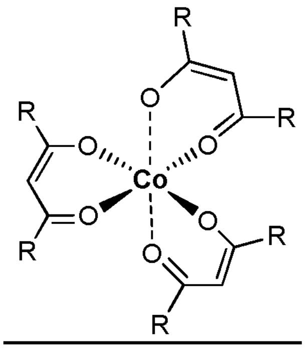

**(C)** = $[Co(TMHD)_3]$ quand R = t-Butyle

**(D)** = $[Co(acac)_3]$ quand R = Méthyle

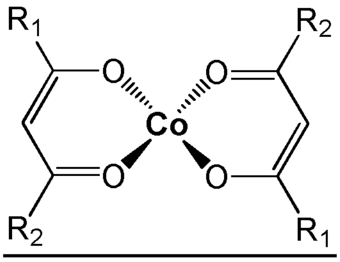

(**E**) = $[Co(cetoester)_2]$ quand $R_1$ = Méthyle et $R_2$ = Méthoxy

(**F**) = $[Co(Rhodiastab50)_2]$ quand $R_1$ = Phényle et $R_2$ = $C_{17}H_{35}$ ou $C_{15}H_{31}$

Les catalyseurs (A), (B), (C) et (D) sont disponibles commercialement, par exemple sous les références Sigma-Aldrich pureté 99% pour le composé $[Co(acac)_{2]}$, Strem pureté >98% pour le composé $[Co(TMHD)_2]$.

Le catalyseur (E) est obtenu par une synthèse bien connue de l'homme du métier :

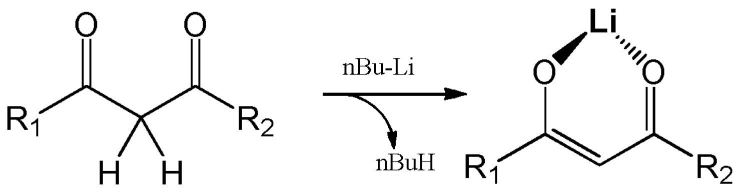


Le composé cétoester avec $R_1$ = Méthyle et $R_2$ = Méthoxy (fournisseur : Sigma-Aldrich) est dans un premier temps déprotoné à l'aide d'un équivalent de Bu-Li (fournisseur : Sigma-Aldrich) à basse température (-78°C). Le sel obtenu est recristallisé dans le diéthyléther. Le ligand déprotoné obtenu (sel de lithium) est additionné sur un chlorure de cobalt ($CoCl_2$) en solution dans le THF à température ambiante (12 h). Après décantation, filtration et concentration, le complexe est recristallisé dans le THF.

Le complexe $[Co(cetoester)_2]$ se présente sous la forme d'un solide violet foncé.

Le catalyseur (F) est également obtenu par une synthèse bien connue de l'homme du métier :

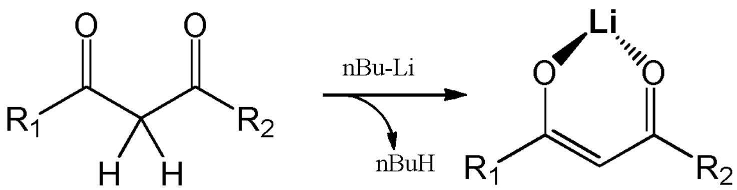


Le composé dicétone avec $R^1$ = Phényle et $R^2$ = $C_{17}H_{35}$ ou $C_{15}H_{31}$ (fournisseur : Solvay) est dans un premier temps déprotoné à l'aide d'un équivalent de Bu-Li (fournisseur : Sigma-Aldrich) à basse température (-78°C). Le sel obtenu est recristallisé dans le diéthyléther. Le ligand déprotoné obtenu (sel de lithium) est additionné sur un chlorure

de cobalt ($CoCl_2$) en solution dans le THF à température ambiante (12 h). Le complexe obtenu est visqueux, de coloration bleue foncée. Une étape de recristallisation permet de conduire à l'obtention d'un solide.

II) Formulations et résultats:

Pour chaque formulation testée, le catalyseur est pesé et introduit à température ambiante dans un flacon de verre.

On a ensuite introduit 1,87g de divinyltétraméthylsiloxane (dvtms) puis 1,27g d'huile MD'$_{50}$M. Le flacon est placé sous agitation dans un bain d'huile qui sera chauffé à la température de réaction souhaitée.

Le ratio R correspond au rapport molaire des atomes d'hydrogène liés au silicium (Si-H) dans l'organohydrogénopolysiloxane (MD'$_{50}$M) sur les radicaux alcényles (ici vinyles) liés au silicium (Si-CH=$CH_2$) dans l'organopolysiloxane (dvtms).

Le début de réticulation est mesuré. Le début de réticulation est défini comme étant l'arrêt de l'agitation dû à une augmentation de la viscosité du milieu.

Tableau 1 :

| | Catalyseur | Température de réaction | %mol de catalyseur(1) | Ratio R | Atmosphère | Début de réticulation |
|---|---|---|---|---|---|---|
| Formulation **1** (comparatif) | [Co(acac)$_3$] | 110°C | 0,25% | 1 :1 | Non inerte | Pas de réticulation |
| Formulation **2** (comparatif) | [Co (TMHD)$_3$] | 110°C | 0,25% | 1 :1 | Non inerte | Pas de réticulation |
| Formulation **3** (invention) | [Co(acac)$_2$] | 110°C | 0,25% | 1 :1 | Non inerte | 15min |
| Formulation **4** (invention) | [Co (TMHD)$_2$] | 110°C | 0,25% | 1 :1 | Non inerte | 15min |
| (1) Exprimé en % molaire de cobalt par nombre de moles de radicaux vinyles liés au silicium (Si-CH=$CH_2$) dans dvtms | | | | | | |

Les résultats montrent que les formulations **1** et **2** comparatives, où le catalyseur est un complexe de Co(III), ne réticulent pas alors que les formulations **3** et **4** selon l'invention où le catalyseur est un complexe de Co(II) présentant deux ligands β-dicarbonylés réticulent en 15min.

On a par ailleurs testé les catalyseurs de cobalt selon l'invention dans les différentes conditions opératoires suivantes :

Tableau 2 :

| | Catalyseur | Température de réaction | %mol de catalyseur (1) | Ratio R | Atmosphère | Début de réticulation |
|---|---|---|---|---|---|---|
| Formulation **5** (invention) | [Co(acac)$_2$] | 90°C | 0,25% | 1 :1 | Non inerte | Moins de 25min |
| Formulation **6** (invention) | [Co(TMHD)$_2$] | 110°C | 0,125% | 1 :1 | Non inerte | 25min |
| Formulation **7** (invention) | [Co(acac)$_2$] | 130°C | 0,125% | 1 :1 | Non inerte | Réticulation instantanée |
| Formulation **8** (invention) | [Co(cetoester)$_2$] | 90°C | 0,25% | 1 :1 | Non inerte | 20min |
| Formulation **9** (invention) | [Co(cetoester)$_2$] | 90°C | 0,125% | 1 :1 | Non inerte | 50min |
| Formulation **10** (invention) | [Co (Rhodiastab50)$_2$] | 90°C | 0,125% | 1 :1 | Non inerte | 25min |
| (1) Exprimé en % molaire de cobalt par nombre de moles de radicaux vinyles liés au silicium (Si-CH=$CH_2$) dans dvtms | | | | | | |

La formulation **5** selon l'invention montre qu'une réticulation est obtenue dès 90°C, même si cette réticulation est plus lente que celle observée pour la formulation **3** opérée à 110°C.
Les formulations **6, 7, 8** et **10** selon l'invention montrent qu'une réticulation est obtenue dès 0,125% molaire de catalyseur, ce qui permet d'éviter ou de limiter la coloration du matériau réticulé.
On note par ailleurs que l'augmentation de la température permet de diminuer significativement le temps de réticulation (formulations **6** et **7**).

**EXEMPLE 2 : catalyseurs** à **base de cobalt pour la réticulation de $M^{vi}$ $D_{70}$ $M^{vi}$ avec $MD'_{50}M$**

I) Constituants

1) Organopolysiloxane **A** de formule $M^{vi}D_{70}M^{vi}$ (0,038 mole de radicaux vinyle liés au silicium pour 100g d'huile), avec : Vi= Vinyle ; $M^{vi}$: $(CH_3)_2ViSiO_{1/2}$ et D: $(CH_3)_2SiO_{2/2}$
2) Organohydrogénopolysiloxane **B** de formule: $MD'_{50}M$ (1,58mole d'atomes d'hydrogène liés au silicium pour 100g d'huile), avec : M: $(CH_3)_3SiO_{1/2;}$ et D': $(CH_3)HSiO_{2/2}$
3) Catalyseurs **(A), (B), (C), (D), (E)** et **(F)** tels que décrits dans l'exemple 1.

II) Formulations et résultats:

Pour chaque formulation testée, le catalyseur est pesé et introduit à température ambiante dans un flacon de verre.
On a ensuite introduit l'huile $M^{vi}D_{70}M^{vi}$ puis l'huile $MD'_{50}M$.
Pour un ratio R correspondant au rapport molaire des atomes d'hydrogène liés au silicium (Si-H) dans l'organohydrogénopolysiloxane ($MD'_{50}M$) sur les radicaux alcényles (ici vinyles) liés au silicium ($Si-CH=CH_2$) dans l'organopolysiloxane ($M^{vi}D_{70}M^{vi}$) de 1 :1, on introduit 4,39g d'huile $M^{vi}D_{70}M^{vi}$ puis 0,105g d'huile $MD'_{50}M$.
On ajuste les teneurs en huile $M^{vi}D_{70}M^{vi}$ et en huile $MD'_{50}M$ selon le ratio R souhaité.
Le flacon est placé sous agitation dans un bain d'huile qui sera chauffé à la température de réaction souhaitée.
Le début de réticulation est mesuré.
On a testé les catalyseurs de cobalt selon l'invention dans les différentes conditions opératoires suivantes :

➢ ***Etude de la durée de réticulation selon le catalyseur mis en oeuvre***

➢ ***Etude de l'effet de la concentration en catalyseur***

Tableau 3 : ➢ ***Etude de l'effet de la concentration en catalyseur***

| | Catalyseur | Température de réaction | %mol de catalyseur(1) | Ratio R | Atmosphère | Début de réticulation |
|---|---|---|---|---|---|---|
| Formulation **11** (invention) | $[Co(acac)_2]$ | 110°C | 1,6% | 1 :1 | Non inerte | 30 min |
| Formulation **12** (invention) | $[Co(TMHD)_2]$ | 110°C | 1,6% | 1 :1 | Non inerte | 1h |
| Formulation **13** (invention) | $[Co(cetoester)_2]$ | 110°C | 1,6% | 1 :1 | Non inerte | < 20h |

(1) Exprimé en % molaire de cobalt par nombre de moles de radicaux vinyles liés au silicium ($Si-CH=CH_2$) dans l'organopolysiloxane ($M^{vi}D_{70}M^{vi}$)

Tableau 4 : Effet de l'augmentation de la concentration en catalyseur (1)

| | Catalyseur | Température de réaction | %mol de catalyseur(1) | Ratio R | Atmosphère | Début de réticulation |
|---|---|---|---|---|---|---|
| Formulation **14** (invention) | $[Co(TMHD)_2]$ | 110°C | 2% | 1 :1 | Non inerte | 2h15 |

(suite)

| | Catalyseur | Température de réaction | %mol de catalyseur(1) | Ratio R | Atmosphère | Début de réticulation |
|---|---|---|---|---|---|---|
| Formulation **15** (invention) | [Co (TMHD)$_2$] | 110°C | 4% | 1 :1 | Non inerte | Moins d'1h15 |
| (2) Exprimé en % molaire de cobalt par nombre de moles de radicaux vinyles liés au silicium (Si-CH=$CH_2$) dans l'organopolysiloxane ($M^{vi}D_{70}M^{vi}$) | | | | | | |

Les formulations **14** et **15** selon l'invention montrent que l'augmentation de la concentration en catalyseur permet de diminuer significativement le temps de réticulation.

Tableau 5 : effet de l'augmentation de la concentration en catalyseur (2)

| | Catalyseur | Température de réaction | %mol de catalyseur(1) | Ratio R | Atmosphère | Début de réticulation |
|---|---|---|---|---|---|---|
| Formulation **16** (invention) | [Co(acac)$_2$] | 110°C | 0,08% | 3,1 :1 | Non inerte | 12h |
| Formulation **17** (invention) | [Co(acac)$_2$] | 110°C | 0,16% | 3,1 :1 | Non inerte | 4h |
| Formulation **18** (invention) | [Co(acac)$_2$] | 110°C | 0,4% | 3,1 :1 | Non inerte | 1h45 |
| Formulation **19** (invention) | [Co(acac)$_2$] | 110°C | 0,8% | 3,1 :1 | Non inerte | 1h |
| Formulation **20** (invention) | [Co(acac)$_2$] | 110°C | 1,6% | 3,1 :1 | Non inerte | 25min |
| Formulation **21** (invention) | [Co(acac)$_2$] | 110°C | 3,1% | 3,1 :1 | Non inerte | 30min |
| (1)Exprimé en % molaire de cobalt par nombre de moles de radicaux vinyles liés au silicium (Si-CH-$CH_2$) dans l'organopolysiloxane ($M^{vi}D_{70}M^{vi}$) | | | | | | |

Les formulations **16 à 21** selon l'invention montrent que l'augmentation de la concentration en catalyseur permet de diminuer significativement le temps de réticulation. La formulation **16** montre par ailleurs que la réticulation peut être observée même avec de très faibles teneurs en catalyseur, ce qui permet d'éviter ou de limiter la coloration du matériau réticulé.

➢ ***Etude de l'effet du ratio R***

Tableau 6 : Effet du ratio R (1)

| | Catalyseur | Température de réaction | %mol de catalyseur(1) | Ratio R | Début de réticulation |
|---|---|---|---|---|---|
| Formulation **22** (invention) | [Co(acac)$_2$] | 110°C | 2% | 2 :1 | Moins de 17h |
| Formulation **23** (invention) | [Co(acac)$_2$] | 110°C | 2% | 4 :1 | 1h20 |
| (1)Exprimé en % molaire de cobalt par nombre de moles de radicaux vinyles liés au silicium (Si-CH=$CH_2$) dans l'organopolysiloxane ($M^{vi}D_{70}M^{vi}$) | | | | | |

Tableau 7 : Effet du ratio R (2)

| | Catalyseur | Température de réaction | %mol de catalyseur(1) | Ratio R | Début de réticulation |
|---|---|---|---|---|---|
| Formulation **24** (invention) | [Co(acac)$_2$] | 110°C | 1,6% | 1,6 : 1 | 40 min |
| Formulation **25** (invention) | [Co(acac)$_2$] | 110°C | 1,6% | 3,1 :1 | 20 min |
| (1) Exprimé en % molaire de cobalt par nombre de moles de radicaux vinyles liés au silicium (Si-CH=$CH_2$) dans l'organopolysiloxane ($M^{vi}D_{70}M^{vi}$) | | | | | |

Les réticulations sont opérées sous atmosphère non inerte. Les formulations **22** à **25** montrent que l'augmentation du ratio R permet de diminuer significativement le temps de réticulation.

➢ ***Etude de l'effet de la température***

Tableau 8 : Effet de l'augmentation de température

| | Catalyseur | Température de réaction | %mol de catalyseur(1) | Ratio R | Atmosphère | Début de réticulation |
|---|---|---|---|---|---|---|
| Formulation **26** (invention) | [Co(acac)$_2$] | 90°C | 1,6% | 3,1 :1 | Non inerte | 1h45 |
| Formulation **27** (invention) | [Co(acac)$_2$] | 110°C | 1,6% | 3,1 :1 | Non inerte | 20 min |
| Formulation **28** (invention) | [Co(acac)$_2$] | 130°C | 1,6% | 3,1 :1 | Non inerte | 15 min |
| (1)Exprimé en % molaire de cobalt par nombre de moles de radicaux vinyles liés au silicium (Si-CH-CH2) dans l'organopolysiloxane (MviD70Mvi) | | | | | | |

Les formulations **26** à **28** selon l'invention montrent que l'augmentation de la température permet de diminuer significativement le temps de réticulation.

➢ ***Etude de l'effet de l'ajout de dvtms***

Les essais figurant au tableau 9 montrent l'impact de l'ajout de quelques équivalents molaires de dvtms dans le milieu réactionnel. Dans ces essais, le dvtms a été introduit après le catalyseur, et avant les huiles $M^{vi}D_{70}M^{vi}$ et $MD'_{50}M$.

Tableau 9 : Effet de l'ajout de dvtms

| | Catalyseur | Température de réaction | %mol de catalyseur(1) | Ratio R | dvtms(2) | Début de réticulation |
|---|---|---|---|---|---|---|
| Formulation **29** (invention) | [Co(acac)$_2$] | 110°C | 2% | 2 :1 | - | Moins de 17h |
| Formulation **30** (invention) | [Co(acac)$_2$] | 110°C | 2% | 2 :1 | 10 eq/Co | 45min |
| Formulation **31** (invention) | [Co(acac)$_2$] | 110°C | 2% | 4 :1 | | 1h20 |
| Formulation **32** (invention) | [Co(acac)$_2$] | 110°C | 2% | 4 :1 | 10 eq/Co | 30min |
| (1) Exprimé en % molaire de cobalt par nombre de moles de radicaux vinyles liés au silicium (Si-CH=$CH_2$) dans l'organopolysiloxane ($M^{vi}D_{70}M^{vi}$)<br>(2) Exprimé en équivalent molaire par rapport au cobalt | | | | | | |

Les réticulations sont opérées sous atmosphère non inerte.

Les résultats du tableau 9 montrent que l'ajout de dvtms permet de diminuer significativement le temps de réticulation.

## Revendications

1. Composition **X** réticulable comprenant :

   - au moins un composé organopolysiloxane **A** comportant, par molécule, au moins deux radicaux alcényles en $C_2$-$C_6$ liés à des atomes de silicium,
   - au moins un composé organohydrogénopolysiloxane **B** comportant, par molécule, au moins deux atomes d'hydrogène liés à un atome de silicium identique ou différent,
   - au moins un catalyseur **C** qui est un complexe répondant à la formule suivante:

   $$[Co(L^1)_2]$$

   dans laquelle:

     - le symbole Co représente le cobalt au degré d'oxydation II,
     - les symboles $L^1$, identiques ou différents, représentent un ligand qui est un anion β-dicarbonylato ou l'anion énolate d'un composé β-dicarbonylé,

   - éventuellement au moins un promoteur d'adhérence **D** et
   - éventuellement au moins une charge **E.**

2. Composition **X** selon la revendication 1, **caractérisée en ce que** le catalyseur **C** est présent en une teneur allant de 0,001 à 10% molaire de cobalt par nombre de moles de radicaux alcényles en $C_2$-$C_6$ liés à des atomes de silicium du composé organopolysiloxane **A,** de préférence de 0,01 à 7%, et plus préférentiellement de 0,1 à 5%.

3. Composition **X** selon l'une quelconque des revendications précédentes, **caractérisée en ce qu'**elle est exempte de catalyseur à base de platine, de palladium, de ruthénium ou de rhodium.

4. Composition **X** selon la revendication 1, **caractérisée en ce que** le ligand $L^1$ est un anion dérivé d'un composé de formule (1) :

   $$R^1COCHR^2COR^3 \quad \textbf{(1)}$$

   dans laquelle :

   - $R^1$ et $R^3$, identiques ou différents, représentent un radical hydrocarboné en $C_1$-$C_{30}$ linéaire, cyclique ou ramifié, un aryle contenant entre 6 et 12 atomes de carbone, ou un radical -$OR^4$ avec $R^4$ qui représente un radical hydrocarboné en $C_1$-$C_{30}$ linéaire, cyclique ou ramifié,
   - $R^2$ est un atome d'hydrogène ou un radical hydrocarboné, de préférence alkyle, comprenant de 1 à 4 atomes de carbone ; avec
   - $R^1$ et $R^2$ peuvent être reliés pour former un cycle en $C_5$-$C_6$, et
   - $R^2$ et $R^4$ peuvent être reliés pour former un cycle en $C_5$-$C_6$.

5. Composition **X** selon la revendication précédente, dans laquelle le composé de formule **(1)** est choisi parmi le groupe constitué par les β-dicétones: 2,4-pentanedione (acac); l'hexanedione-2,4; heptanedione-2,4; heptanedione-3,5; l'éthyl-3 pentanedione-2,4; méthyl-5 hexanedione-2,4; octanedione-2,4; octanedione-3,5; diméthyl-5,5 hexanedione-2,4; méthyl-6 heptanedione-2,4; diméthyl-2, 2 nonanedione-3,5; diméthyl-2,6 heptanedione-3,5; 2-acétylcyclohexanone (*Cy-acac*); 2,2,6,6-tétraméthyl-3,5-heptanedione (*TMHD*); 1,1,1,5,5,5-hexafluoro-2,4-pentanedione (*F-acac*)]; benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; benzoylstéaroylméthane; benzoylpalmitoylméthane; octanoylbenzoylméthane; 4-t-butyl-4'-méthoxy-dibenzoylméthane; 4,4'-diméthoxy-dibenzoylméthane et 4,4'-di-tert-butyl-dibenzoylméthane; et de préférence parmi les β-dicétones 2,4-pentanedione (acac) et 2,2,6,6-tétraméthyl-3,5-heptanedione (*TMHD*).

**6.** Composition **X** selon l'une quelconque des revendications précédente, dans laquelle le catalyseur **C** est choisi parmi les complexes $[Co(acac)_{2]}$, $[Co(TMHD)_2]$, $[Co(cétoester)_2]$ et $[Co(Rhodiastab\ 50)_2]$, où « acac » signifie l'anion dérivé du composé 2,4-pentanedione, « THMD » signifie l'anion dérivé du composé 2,2,6,6-tétraméthyl-3,5-heptanedione, « cétoester » signifie l'anion dérivé d'un ester méthylique de l'acide acétylacétique et « Rhodiastab 50 » signifie un mélange d'anions dérivés du composé benzoylstéaroylméthane, et d'anions dérivés du composé benzoylpalmitoylméthane.

**7.** Composition **X** selon la revendication précédente, **caractérisé en ce que** l'organopolysiloxane **A** comprend :

(i) au moins deux motifs siloxyles **(A.1),** identiques ou différents, de formule suivante :

$$W_aZ_bSiO_{\frac{4-(a+b)}{2}} \quad \textbf{(A.1)}$$

- dans laquelle :

- a= 1 ou 2, b= 0, 1 ou 2 et a+b= 1, 2 ou 3;
- les symboles W, identiques ou différents, représentent un groupement alcényle linéaire ou ramifié en $C_2$-$C_6$,
- et les symboles Z, identiques ou différents, représentent un groupe hydrocarboné monovalent ayant de 1 à 30 atomes de carbone, et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle,

(ii) et éventuellement au moins un motif siloxyle de formule suivante :

$$Z^1_aSiO_{\frac{4-a}{2}} \quad \textbf{(A.2)}$$

dans laquelle :

- a= 0, 1, 2 ou 3,
- les symboles $Z^1$, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone inclus et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle.

**8.** Composition **X** selon l'une quelconque des revendications précédentes, dans laquelle le composé organohydrogénopolysiloxane **B** comprend au moins trois atomes d'hydrogène par molécule directement liés à un atome de silicium identique ou différent.

**9.** Composition **X** selon l'une quelconque des revendications précédentes, dans laquelle le composé organohydrogénopolysiloxane **B** est un organopolysiloxane comprenant :

(i) au moins deux motifs siloxyles et, de préférence, au moins trois motifs siloxyles de formule suivante:

$$H_dZ^3_eSiO_{\frac{4-(d+e)}{2}} \quad \textbf{(B.1)}$$

dans laquelle:

- d= 1 ou 2, e = 0, 1 ou 2 et d+e= 1, 2 ou 3,
- les symboles $Z^3$, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle, et

(ii) éventuellement au moins un motif siloxyle de formule suivante :

$$Z^2_c SiO_{\frac{4-c}{2}} \quad \textbf{(B.2)}$$

dans laquelle :

- c= 0, 1, 2 ou 3,
- les symboles $Z^2$, identiques ou différents, représentent un groupe hydrocarboné monovalent ayant de 1 à 30 atomes de carbone et de préférence choisi parmi le groupe constitué par les groupes alkyles ayant de 1 à 8 atomes de carbone et les groupes aryles contenant entre 6 et 12 atomes de carbone, et encore plus préférentiellement choisi parmi le groupe constitué par un radical méthyle, éthyle, propyle, 3,3,3-trifluoropropyle, xylyle, tolyle et phényle.

**10.** Composition **X** selon l'une quelconque des revendications précédentes, **caractérisée en ce qu'**elle comprend un second composé organopolysiloxane comportant, par molécule, au moins deux radicaux alcényles en $C_2$-$C_6$ liés à des atomes de silicium, différent du composé organopolysiloxane **A,** ledit second composé organopolysiloxane étant de préférence le divinyltétraméthylsiloxane.

**11.** Composition **X** selon l'une quelconque des revendications précédentes, **caractérisée en ce que** les proportions de l'organopolysiloxane **A** et de l'organohydrogénopolysiloxane **B** sont telles que le rapport molaire des atomes d'hydrogène liés au silicium dans l'organohydrogénopolysiloxane **B** sur les radicaux alcényles liés au silicium dans l'organopolysiloxane **A** est compris entre 0,2 et 20, de préférence entre 0,5 et 15, plus préférentiellement entre 0,5 et 10 et encore plus préférentiellement entre 0,5 et 5.

**12.** Composition **X** selon l'une quelconque des revendications précédentes, **caractérisée en ce qu'**elle comprend un ou plusieurs additifs fonctionnels choisi parmi:

- les résines silicone,
- les modulateurs d'adhérence,
- les additifs pour augmenter la consistance,
- les pigments, et
- les additifs de tenue thermique, de tenue aux huiles ou de tenue au feu, par exemple les oxydes métalliques.

**13.** Utilisation du catalyseur **C** tel que décrit selon l'une quelconques des revendications 1 à 12 comme catalyseur de réticulation de compositions silicones.

**14.** Procédé de réticulation de compositions silicones, **caractérisé en ce qu'**il consiste à chauffer une composition **X** selon l'une quelconque des revendications 1 à 12 à une température allant de 70 à 200°C, de préférence de 80 à 150°C, et plus préférentiellement de 80 à 130°C.

**15.** Matériau silicone réticulé **Y** obtenu par chauffage à une température allant de 70 à 200°C, de préférence de 80 à 150°C, et plus préférentiellement de 80 à 130°C, d'une composition **X** selon l'une quelconque des revendications 1 à 12.

## Patentansprüche

**1.** Vernetzbare Zusammensetzung **X,** umfassend:

- mindestens eine Organopolysiloxan-Verbindung **A,** die pro Molekül mindestens zwei an Siliciumatome gebundene $C_2$-$C_6$-Alkenylreste aufweist,
- mindestens eine Organohydrogenpolysiloxan-Verbindung **B,** die pro Molekül mindestens zwei an dasselbe Siliciumatom oder verschiedene Siliciumatome gebundene Wasserstoffatome aufweist,
- mindestens einen Katalysator **C,** bei dem es sich um einen Komplex handelt, der der folgenden Formel entspricht:

$$[Co(L^1)_2]$$

in der:

  - das Symbol Co für Cobalt in der Oxidationsstufe II steht,
  - die Symbole $L^1$ gleich oder verschieden sind und für einen Liganden stehen, bei dem es sich um ein β-Dicarbonylato-Anion oder das Enolat-Anion einer β-Dicarbonylverbindung handelt,

- gegebenenfalls mindestens einen Haftvermittler **D** und
- gegebenenfalls mindestens einen Füllstoff **E.**

**2.** Zusammensetzung **X** nach Anspruch 1, **dadurch gekennzeichnet, dass** der Katalysator **C** in einem Gehalt im Bereich von 0,001 bis 10 Mol-% Cobalt pro Zahl der Mole von an Siliciumatome gebundenen $C_2$-$C_6$-Alkenylresten in der Organopolysiloxan-Verbindung **A,** vorzugsweise von 0,01 bis 7 % und weiter bevorzugt von 0,1 bis 5 %, vorliegt.

**3.** Zusammensetzung **X** nach einem der vorhergehenden Ansprüche, **dadurch gekennzeichnet, dass** sie frei von Katalysator auf Basis von Platin, Palladium, Ruthenium oder Rhodium ist.

**4.** Zusammensetzung **X** nach Anspruch 1, **dadurch gekennzeichnet, dass** es sich bei dem Liganden $L^1$ um ein Anion handelt, das sich von einer Verbindung der Formel (1) ableitet:

$$R^1COCHR^2COR^3 \quad \textbf{(1)}$$

in der:

- $R^1$ und $R^3$ gleich oder verschieden sind und für einen linearen, cyclischen oder verzweigten $C_1$-$C_{30}$-Kohlenwasserstoffrest, ein Aryl, das zwischen 6 und 12 Kohlenstoffatome enthält, oder einen Rest
- $OR^4$ stehen, wobei $R^4$ für einen linearen, cyclischen oder verzweigten $C_1$-$C_{30}$-Kohlenwasserstoffrest steht,
- $R^2$ für ein Wasserstoffatom oder einen Kohlenwasserstoffrest, vorzugsweise einen Alkylrest, mit 1 bis 4 Kohlenstoffatomen steht; wobei
- $R^1$ und $R^2$ miteinander zu einem $C_5$-$C_6$-Ring verbunden sein können und
- $R^2$ und $R^4$ miteinander zu einem $C_5$-$C_6$-Ring verbunden sein können.

**5.** Zusammensetzung **X** nach einem der vorhergehenden Ansprüche, wobei die Verbindung der Formel **(1)** aus der Gruppe bestehend aus den β-Diketonen 2,4-Pentandion (*acac*); 2,4-Hexandion; 2,4-Heptandion; 3,5-Heptandion; 3-Ethyl-2,4-pentandion; 5-Methyl-2,4-hexandion; 2,4-Octandion; 3,5-Octandion; 5,5-Dimethyl-2,4-hexandion; 6-Methyl-2,4-heptandion; 2,2-Dimethyl-3,5-nonandion; 2,6-Dimethyl-3,5-heptandion; 2-Acetylcyclohexanon (*Cy-acac*); 2,2,6,6-Tetramethyl-3,5-heptandion (*TMHD*); 1,1,1,5,5,5-Hexafluor-2,4-pentandion (*F-acac*); Benzoylaceton; Dibenzoylmethan; 3-Methyl-2,4-pentandion; 3-Acetyl-2-pentanon; 3-Acetyl-2-hexanon; 3-Acetyl-2-heptanon; 3-Acetyl-5-methyl-2-hexanon; Benzoylstearoylmethan; Benzoylpalmitoylmethan; Octanoylbenzoylmethan; 4-t-Butyl-4'-methoxydibenzoylmethan; 4,4'-Dimethoxydibenzoylmethan und 4,4'-Di-tert-butyldibenzoylmethan und vorzugsweise aus den β-Diketonen 2,4-Pentandion (*acac*) und 2,2,6,6-Tetramethyl-3,5-heptandion *(TMHD)* ausgewählt ist.

**6.** Zusammensetzung **X** nach einem der vorhergehenden Ansprüche, wobei der Katalysator **C** aus den Komplexen $[Co(acac)_2]$, $[Co(TMHD)_2]$, $[Co(Ketoester)_2]$ und $[Co(Rhodiastab\ 50)_2]$ ausgewählt ist, wobei "acac" für das von der Verbindung 2,4-Pentandion abgeleitete Anion steht, "TMHD" für das von der Verbindung 2,2,6,6-tetramethyl-3,5-heptandion abgeleitete Anion steht, "Ketoester" für das von einem Methylester von Acetylessigsäure abgeleitete Anion steht und "Rhodiastab 50" für ein Gemisch von Anionen, die sich von der Verbindung Benzoylstearoylmethan ableiten, und an Ionen, die sich von der Verbindung Benzoylpalmitoylmethan ableiten, steht.

**7.** Zusammensetzung **X** nach dem vorhergehenden Anspruch, **dadurch gekennzeichnet, dass** das Organopolysiloxan **A:**

(i) mindestens zwei gleiche oder verschiedene Siloxyleinheiten **(A.1)** der folgenden Formel:

$$W_aZ_bSiO_{\frac{4-(a+b)}{2}} \quad \textbf{(A.1)}$$

- in der:

- a = 1 oder 2, b = 0, 1 oder 2 und a+b = 1, 2 oder 3;
- die Symbole W gleich oder verschieden sind und für eine lineare oder verzweigte $C_2$-$C_6$-Alkenylgruppe stehen
- und die Symbole Z gleich oder verschieden sind und für eine einwertige Kohlenwasserstoffgruppe mit 1 bis 30 Kohlenstoffatomen stehen und vorzugsweise aus der Gruppe bestehend aus Alkylgruppe mit 1 bis 8 Kohlenstoffatomen und Arylgruppen, die zwischen 6 und 12 Kohlenstoffatome enthalten, ausgewählt sind und noch weiter bevorzugt aus der Gruppe bestehend aus einem Methyl-, Ethyl-, Propyl, 3,3,3-Trifluorpropyl-, Xylyl-, Tolyl- und Phenylrest ausgewählt sind,

(ii) und gegebenenfalls mindestens eine Siloxyleinheit der folgenden Formel:

$$Z^1_aSiO_{\frac{4-a}{2}} \quad \textbf{(A.2)}$$

- in der:

- a = 0, 1, 2 oder 3,
- die Symbole $Z^1$ gleich oder verschieden sind und für eine einwertige Kohlenwasserstoffgruppe mit 1 bis 30 Kohlenstoffatomen stehen und vorzugsweise aus der Gruppe bestehend aus Alkylgruppen mit 1 bis 8 Kohlenstoffatomen und Arylgruppen, die zwischen 6 und 12 Kohlenstoffatome enthalten, ausgewählt sind und noch weiter bevorzugt aus der Gruppe bestehend aus einem Methyl-, Ethyl-, Propyl, 3,3,3-Trifluorpropyl-, Xylyl-, Tolyl- und Phenylrest ausgewählt sind,

umfasst.

**8.** Zusammensetzung **X** nach einem der vorhergehenden Ansprüche, wobei die Organohydrogenpolysiloxan-Verbindung **B** mindestens drei Wasserstoffatome pro Molekül umfasst, die direkt an dasselbe Siliciumatom oder verschiedene Siliciumatome gebunden sind.

**9.** Zusammensetzung **X** nach einem der vorhergehenden Ansprüche, wobei es sich bei der Organohydrogenpolysiloxan-Verbindung **B** um ein Organopolysiloxan handelt, das:

(i) mindestens zwei Siloxyleinheiten und vorzugsweise mindestens drei Siloxyleinheiten der folgenden Formel:

$$H_dZ^3_eSiO_{\frac{4-(d+e)}{2}} \quad \textbf{(B.1)}$$

in der:

- d = 1 oder 2, e = 0, 1 oder 2 und d+e = 1, 2 oder 3,
- die Symbole $Z^3$ gleich oder verschieden sind und für eine einwertige Kohlenwasserstoffgruppe mit 1 bis 30 Kohlenstoffatomen stehen und vorzugsweise aus der Gruppe bestehend aus Alkylgruppen mit 1 bis 8 Kohlenstoffatomen und Arylgruppen, die zwischen 6 und 12 Kohlenstoffatome enthalten, ausgewählt sind

und noch weiter bevorzugt aus der Gruppe bestehend aus einem Methyl-, Ethyl-, Propyl, 3,3,3-Trifluorpropyl-, Xylyl-, Tolyl- und Phenylrest ausgewählt sind, und

(ii) gegebenenfalls mindestens eine Siloxyleinheit der folgenden Formel:

$$Z^2_cSiO_{\frac{4-c}{2}} \quad \textbf{(B.2)}$$

in der:

- c = 0, 1, 2 oder 3,
- die Symbole $Z^2$ gleich oder verschieden sind und für eine einwertige Kohlenwasserstoffgruppe mit 1 bis 30 Kohlenstoffatomen stehen und vorzugsweise aus der Gruppe bestehend aus Alkylgruppen mit 1 bis 8 Kohlenstoffatomen und Arylgruppen, die zwischen 6 und 12 Kohlenstoffatome enthalten, ausgewählt sind und noch weiter bevorzugt aus der Gruppe bestehend aus einem Methyl-, Ethyl-, Propyl, 3,3,3-Trifluorpropyl-, Xylyl-, Tolyl- und Phenylrest ausgewählt sind,

umfasst.

**10.** Zusammensetzung **X** nach einem der vorhergehenden Ansprüche, **dadurch gekennzeichnet, dass** sie eine zweite Organopolysiloxan-Verbindung, die pro Molekül mindestens zwei an Siliciumatome gebundene $C_2$-$C_6$-Alkinylreste aufweist, umfasst, die von der Organopolysiloxan-Verbindung **A** verschieden ist, wobei es sich bei der zweiten Organopolysiloxan-Verbindung vorzugsweise um Divinyltetramethylsiloxan handelt.

**11.** Zusammensetzung **X** nach einem der vorhergehenden Ansprüche, **dadurch gekennzeichnet, dass** die Anteile von Organopolysiloxan **A** und Organohydrogenpolysiloxan **B** so beschaffen sind, dass das Molverhältnis von siliciumgebundenen Wasserstoffatomen in dem Organohydrogenpolysiloxan **B** zu den siliciumgebundenen Alkenylresten in dem Organopolysiloxan **A** zwischen 0,2 und 20, vorzugsweise zwischen 0,5 und 15, weiter bevorzugt zwischen 0,5 und 10 und noch weiter bevorzugt zwischen 0,5 und 5 liegt.

**12.** Zusammensetzung **X** nach einem der vorhergehenden Ansprüche, **dadurch gekennzeichnet, dass** sie einen oder mehrere funktionelle Zusatzstoffe umfasst, die aus:

- Silikonharzen,
- Haftungsmodifikatoren,
- die Konsistenz verbessernden Zusatzstoffen,
- Pigmenten und
- Zusatzstoffen für Wärmebständigkeit, Ölbeständigkeit oder Flammfestigkeit, beispielsweise Metalloxiden,

ausgewählt sind.

**13.** Verwendung des Katalysators **C** gemäß einem der Ansprüche 1 bis 12 als Katalysator zur Vernetzung von Silikonzusammensetzungen.

**14.** Verfahren zum Vernetzen von Silikonzusammensetzungen, **dadurch gekennzeichnet, dass** es darin besteht, dass man eine Zusammensetzung **X** nach einem der Ansprüche 1 bis 12 auf eine Temperatur im Bereich von 70 bis 200 °C, vorzugsweise von 80 bis 150 °C und noch weiter bevorzugt von 80 bis 130 °C erhitzt.

**15.** Vernetztes Silikonmaterial **Y,** erhalten durch Erhitzen einer Zusammensetzung **X** nach einem der Ansprüche 1 bis 12 auf eine Temperatur im Bereich von 70 bis 200 °C, vorzugsweise von 80 bis 150 °C und noch weiter bevorzugt von 80 bis 130 °C.

## Claims

**1.** Crosslinkable composition **X** comprising:

- at least one organopolysiloxane compound **A** comprising, per molecule, at least two $C_2$-$C_6$ alkenyl radicals bonded to silicon atoms,
- at least one organohydrogenopolysiloxane compound **B** comprising, per molecule, at least two hydrogen atoms bonded to an identical or different silicon atom,
- at least one catalyst **C** which is a complex corresponding to the following formula:

$$[Co(L1)_2]$$

in which:

- the symbol Co represents cobalt in oxidation state II,
- the symbols $L^1$, which may be identical or different, represent a ligand which is a β-dicarbonylato anion or the enolate anion of a β-dicarbonyl compound,
- optionally at least one adhesion promoter **D** and
- optionally at least one filler **E.**

**2.** Composition **X** according to Claim 1, **characterized in that** the catalyst **C** is present in a content ranging from 0.001 to 10 mol% of cobalt per number of moles of $C_2$-$C_6$ alkenyl radicals bonded to silicon atoms in the organopolysiloxane compound **A,** preferably from 0.01 to 7%, and more preferentially from 0.1 to 5%.

**3.** Composition **X** according to either of the preceding claims, **characterized in that** it is free of catalyst based on platinum, palladium, ruthenium or rhodium.

**4.** Composition **X** according to Claim 1, **characterized in that** the ligand $L^1$ is an anion derived from a compound of formula (1):

$$R^1COCHR^2COR^3 \qquad \textbf{(1)}$$

in which:

- $R^1$ and $R^3$, which may be identical or different, represent a linear, cyclic or branched $C_1$-$C_{30}$ hydrocarbon-based radical, an aryl containing between 6 and 12 carbon atoms or a radical
- $OR^4$ with $R^4$ representing a linear, cyclic or branched $C_1$-$C_{30}$ hydrocarbon-based radical,
- $R^2$ is a hydrogen atom or a hydrocarbon-based radical, preferably an alkyl radical comprising from 1 to 4 carbon atoms; with
- $R^1$ and $R^2$ may be joined together to form a $C_5$-$C_6$ ring, and
- $R^2$ and $R^4$ may be joined together to form a $C_5$-$C_6$ ring.

**5.** Composition **X** according to the preceding claim, in which the compound of formula **(1)** is chosen from the group formed by the following β-diketones: 2,4-pentanedione (*acac*); 2,4-hexanedione; 2,4-heptanedione; 3,5-heptanedione; 3-ethyl-2,4-pentanedione; 5-methyl-2,4-hexanedione; 2,4-octanedione; 3,5-octanedione; 5,5-dimethyl-2,4-hexanedione; 6-methyl-2,4-heptanedione; 2,2-dimethyl-3,5-nonanedione; 2,6-dimethyl-3,5-heptanedione; 2-acetylcyclohexanone (*Cy-acac*); 2,2,6,6-tetramethyl-3,5-heptanedione (*TMHD*); 1,1,1,5,5,5-hexafluoro-2,4-pentanedione (*F-acac*); benzoylacetone; dibenzoylmethane; 3-methyl-2,4-pentadione; 3-acetyl-2-pentanone; 3-acetyl-2-hexanone; 3-acetyl-2-heptanone; 3-acetyl-5-methyl-2-hexanone; benzoylstearoylmethane; benzoylpalmitoylmethane; octanoylbenzoylmethane; 4-t-butyl-4'-methoxydibenzoylmethane; 4,4'-dimethoxydibenzoylmethane and 4,4'-di-tert-butyldibenzoylmethane, and preferably from the β-diketones 2,4-pentanedione (*acac*) and 2,2,6,6-tetramethyl-3,5-heptanedione *(TMHD).*

**6.** Composition **X** according to any one of the preceding claims, in which the catalyst **C** is chosen from the complexes $[Co(acac)_2]$, $[Co(TMHD)_2]$, $[Co(keto\ ester)_2]$ and $[Co(Rhodiastab\ 50)_2]$, in which "acac" means the anion derived from the compound 2,4-pentanedione, "TMHD" means the anion derived from the compound 2,2,6,6-tetramethyl-3,5-heptanedione, "keto ester" means the anion derived from a methyl ester of acetylacetic acid and "Rhodiastab 50" means a mixture of anions derived from the compound benzoylstearoylmethane, and anions derived from the compound benzoylpalmitoylmethane.

**7.** Composition **X** according to the preceding claim, **characterized in that** the organopolysiloxane **A** comprises:

(i) at least two siloxyl units **(A.1),** which may be identical or different, having the following formula:

$$W_aZ_bSiO_{\frac{4-(a+b)}{2}} \quad (A.1)$$

- in which:

  - a= 1 or 2, b= 0, 1 or 2 and a+b= 1, 2 or 3;
  - the symbols W, which may be identical or different, represent a linear or branched $C_2$-$C_6$ alkenyl group,
  - and the symbols Z, which may be identical or different, represent a monovalent hydrocarbon-based group containing from 1 to 30 carbon atoms, preferably chosen from the group formed by alkyl groups containing from 1 to 8 carbon atoms and aryl groups containing between 6 and 12 carbon atoms, and even more preferentially chosen from the group formed by methyl, ethyl, propyl, 3,3,3-trifluoropropyl, xylyl, tolyl and phenyl radicals,

(ii) and optionally at least one siloxyl unit having the following formula:

$$Z^1_aSiO_{\frac{4-a}{2}} \quad (A.2)$$

in which:

- a= 0, 1, 2 or 3,
- the symbols $Z^1$, which may be identical or different, represent a monovalent hydrocarbon-based group containing from 1 to 30 carbon atoms, preferably chosen from the group formed by alkyl groups containing from 1 to 8 carbon atoms inclusive and aryl groups containing between 6 and 12 carbon atoms, and even more preferentially chosen from the group formed by methyl, ethyl, propyl, 3,3,3-trifluoropropyl, xylyl, tolyl and phenyl radicals.

**8.** Composition **X** according to any one of the preceding claims, in which the organohydrogenopolysiloxane compound **B** comprises at least three hydrogen atoms per molecule directly bonded to an identical or different silicon atom.

**9.** Composition **X** according to any one of the preceding claims, in which the organohydrogenopolysiloxane compound **B** is an organopolysiloxane comprising:

(i) at least two siloxyl units and preferably at least three siloxyl units having the following formula:

$$H_dZ^3_eSiO_{\frac{4-(d+e)}{2}} \quad (B.1)$$

in which:

- d= 1 or 2, e = 0, 1 or 2 and d+e= 1, 2 or 3,
- the symbols $Z^3$, which may be identical or different, represent a monovalent hydrocarbon-based group containing from 1 to 30 carbon atoms, preferably chosen from the group formed by alkyl groups containing from 1 to 8 carbon atoms and aryl groups containing between 6 and 12 carbon atoms, and even more preferentially chosen from the group formed by methyl, ethyl, propyl, 3,3,3-trifluoropropyl, xylyl, tolyl and phenyl radicals, and

(ii) optionally at least one siloxyl unit having the following formula:

$$Z^2_cSiO_{\frac{4-c}{2}} \quad \textbf{(B.2)}$$

in which:

- c= 0, 1, 2 or 3,
- the symbols $Z^2$, which may be identical or different, represent a monovalent hydrocarbon-based group containing from 1 to 30 carbon atoms, preferably chosen from the group formed by alkyl groups containing from 1 to 8 carbon atoms and aryl groups containing between 6 and 12 carbon atoms, and even more preferentially chosen from the group formed by methyl, ethyl, propyl, 3,3,3-trifluoropropyl, xylyl, tolyl and phenyl radicals.

**10.** Composition **X** according to any one of the preceding claims, **characterized in that** it comprises a second organopolysiloxane compound comprising, per molecule, at least two $C_2$-$C_6$ alkenyl radicals bonded to silicon atoms, different from the organopolysiloxane compound **A,** said second organopolysiloxane compound preferably being divinyltetramethyl siloxane.

**11.** Composition **X** according to any one of the preceding claims, **characterized in that** the proportions of the organopolysiloxane **A** and of the organohydrogenopolysiloxane **B** are such that the mole ratio of the hydrogen atoms bonded to silicon in the organohydrogenopolysiloxane **B** to the alkenyl radicals bonded to silicon in the organopolysiloxane **A** is between 0.2 and 20, preferably between 0.5 and 15, more preferentially between 0.5 and 10 and even more preferentially between 0.5 and 5.

**12.** Composition **X** according to any one of the preceding claims, **characterized in that** it comprises one or more functional additives chosen from:

- silicone resins,
- adhesion modifiers,
- consistency-enhancing additives,
- pigments, and
- heat-resistance, oil-resistance or fire-resistance additives, for example metal oxides.

**13.** Use of the catalyst **C** as described in any one of Claims 1 to 12, as a catalyst for the crosslinking of silicone compositions.

**14.** Process for crosslinking silicone compositions, **characterized in that** it consists in heating a composition **X** according to any one of Claims 1 to 12 to a temperature ranging from 70 to 200°C, preferably from 80 to 150°C and more preferentially from 80 to 130°C.

**15.** Crosslinked silicone material **Y** obtained by heating to a temperature ranging from 70 to 200°C, preferably from 80 to 150°C and more preferentially from 80 to 130°C, of a composition **X** according to any one of Claims 1 to 12.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0142258 A
- FR 1435882 A